# EUROPEAN PATENT APPLICATION

(11) **EP 3 073 104 A1**
(43) Date of publication of application: **28.09.2016**
(21) Application number: 15161393.2
(22) Date of filing: 27.03.2015
(51) Int. Cl.: F02M 21/02, F02D 19/06

(54) **GAS VALVE UNIT OF VESSEL GAS SYSTEM**

(71) Applicant: Caterpillar Motoren GmbH & Co. KG, 24159 Kiel (DE)
(72) Inventor: TUEXEN, Thorsten, 24161 Altenholz (DE); KOELLN, Thies, 24782 Büdelsdorf (DE); VOGLER, Finn, 23611 Bad Schwartau (DE)
(74) Representative: Kramer Barske Schmidtchen Patentanwälte PartG mbB

(57) **Abstract**

A gas valve unit (3) for providing a double walled fuel gas flow control system for a vessel gas system (1) comprises a fuel line (21) for fluidly connecting a fuel gas storage unit (9) with a gaseous fuel system (7A) of an internal combustion engine (7), an inert gas inlet (55A) for flushing a section of vessel gas system (1), a flushing bleed line outlet (53A) for providing an outlet to the environment, and a flushing valve unit (17) configured to control the fluid connection between the fuel line (21) and the inert gas inlet (55A) and/or the flushing bleed line outlet (53A). With such a gas valve unit (3), flexible installations for flushing procedures of the gas storage side of the gaseous fuel system may be provided.

## Description

### Technical Field

The present disclosure generally relates to gas systems for vessel based internal combustion engines such as gaseous fuel operated internal combustion engines and dual fuel internal combustion engines, and more particularly to flushing gas systems with inert gas.

### Background

In marine applications, internal combustion engines may be operated with liquid fuel and/or gaseous fuel. To provide gaseous fuel (herein also referred to as fuel gas), a vessel gas system is provided on board of the vessel. The vessel gas system fluidly connects a fuel gas tank with the engine. Usually, the vessel gas system comprises a storage pressure section and an engine pressure section, wherein the pressure is controlled within a gas valve unit via a flow control valve.

In general, the regulations of the marine classification society require vessel gas systems to be provided with a double wall system. Therefore, double walled piping may be applied as well as providing specific housings or rooms on the vessel for respective sections of the vessel gas system.

For service, maintenance, or when fuel gas is not stored on board, the vessel gas system may be flushed with inert gas, usually nitrogen.

The present disclosure is directed, at least in part, to improving or overcoming one or more aspects of prior systems.

### Summary of the Disclosure

In an aspect of the present disclosure, a gas valve unit for providing a double walled fuel gas control system for a vessel gas system comprises a fuel line for fluidly connecting a fuel gas storage unit with a gaseous fuel system of an internal combustion engine, an inert gas inlet for flushing a section of vessel gas system, a flushing bleed line outlet for providing an outlet to the environment, and a flushing valve unit configured to control the fluid connection between the fuel line and the inert gas inlet and/or the flushing bleed line outlet.

In another aspect, a method for flushing a gas storage side of a gaseous fuel system comprises the steps of providing a system for flushing a gas storage side of a gaseous fuel system , configuring the flushing valve unit to provide a fluid connection from the inert gas inlet to the fuel gas storage unit, providing inert gas at the inert gas inlet, and flushing the inert gas from the inert gas inlet via the section of the gas valve unit to the fuel gas storage unit and, in particular to the environment via a bleed line valve of the gas storage unit.

In another aspect, a method for flushing a gas storage side of a gaseous fuel system comprises providing a system with a gas valve unit for flushing a gas storage side of a gaseous fuel system, configuring the flushing valve unit to provide a fluid connection from the fuel gas storage unit to the flushing bleed line outlet, providing inert gas to the fuel gas storage unit, and flushing the inert gas from the fuel gas storage unit via the section of the gas valve unit to the flushing bleed line outlet.

In some embodiments, the flushing valve unit may comprise a first normally open valve, a first normally closed valve, and a second normally closed valve. The flushing bleed line outlet may be fluidly connected via the first normally open valve and the first normally closed valve to the storage flushing access point of the fuel line, and the inert gas inlet may be fluidly connected via the second normally closed valve and the first normally closed valve to the storage flushing access point.

In some embodiments, a housing of the gas valve unit may comprise a fuel gas inlet and a fuel gas outlet, wherein the fuel line may fluidly connect the fuel gas inlet and the fuel gas outlet. The fuel line further may comprise the storage flushing access point and a fuel control line section, wherein the storage flushing access point may be fluidly positioned between the fuel gas inlet and the fuel control line section.

In some embodiments, the fuel control line section may in particular comprise a flow control valve and a double block and bleed valve system. The gas valve unit may in particular comprise further a safety bleed line outlet fluidly connected to the double block and bleed valve system.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic overview of a vessel gas system for an internal combustion engine on board a vessel;
Fig. 2 is a schematic illustration of an exemplary gas valve unit with an exemplary flushing valve unit for vessel gas systems;
Fig. 3 is a schematic illustration of an alternative embodiment of an exemplary flushing valve unit for gas valve units; and
Figs. 4 and 5 shows exemplary flow diagrams of flushing procedures using gas valve units comprising flushing valve units as illustrated, for example, in Figs. 2 and 3.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that one may provide a configuration of a gas valve unit that allows multiple flushing options for installations in marine vessels. For example, it was realized that by using a valve within the gas valve unit and a valve at the fuel gas storage unit of the gas system, i.e. close to the gas storage, a simply gas valve unit configuration may be implemented. Accordingly, a port for supplying inert gas for the flushing may be provided at the gas valve unit, e.g. to allow the filling of the gas system of the vessel with inert gas. Alternatively, a port for supplying inert gas for the flushing may be provided at the fuel gas storage unit.

The present disclosure is further based in part on the realization that in particular for flushing a double walled gas system of a marine gas engine, the gas valve unit may allow configurations that enable flushing with inert gas at low pressures thereby simplifying the requirements for the inert gas system.

Providing a flushing valve within the gas valve unit further allows using the concept of a single walled system with a special housing.

Moreover, it was realized that respective gas valve units may be located relatively close to the dual fuel or gas engine, e.g. piping length of 10 m or less, thereby requiring longer piping length between the gas storage and the gas valve unit.

More specifically, it was realized that by using a flushing valve unit within the gas valve unit one may, for example, fill the gas system of the vessel with inert gas by providing a pressure relieve device (outlet) on the other side of the gas system in order to successfully flush the gas system with inert gas as well as by venting the gas system via the flushing valve unit inside the gas valve unit, e.g. by using a separate inert gas supply of the gas system to flush the gas system of the vessel.

It was further realized that such a system may allow avoiding or at least reduce contamination of inert gas with fuel gas in case the inert gas pressure drops below fuel gas pressure.

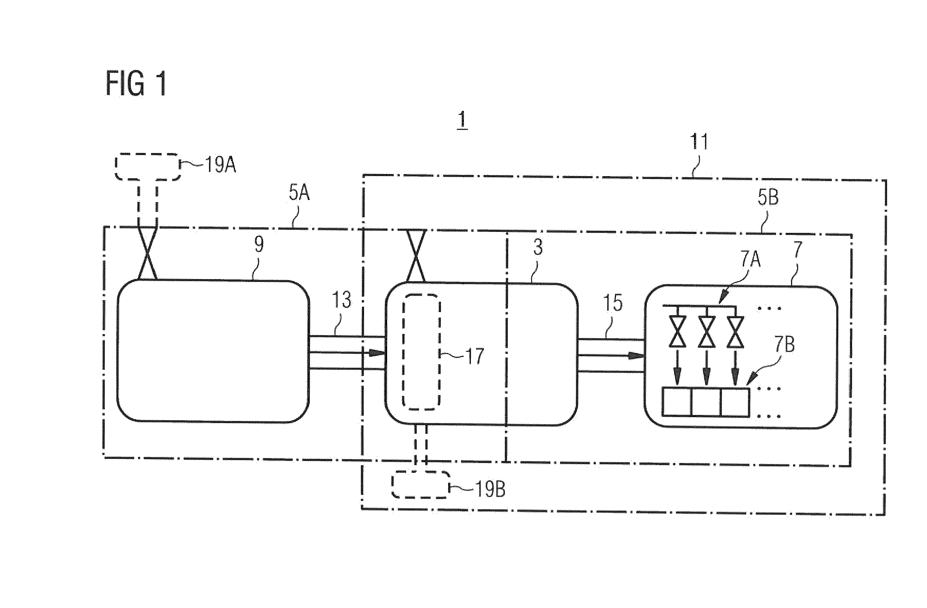

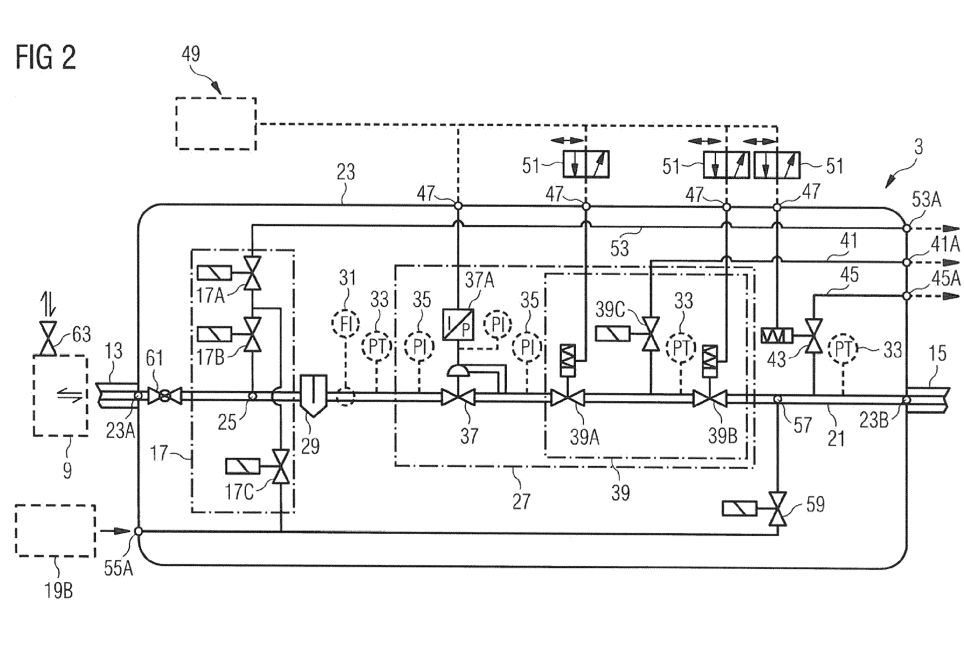

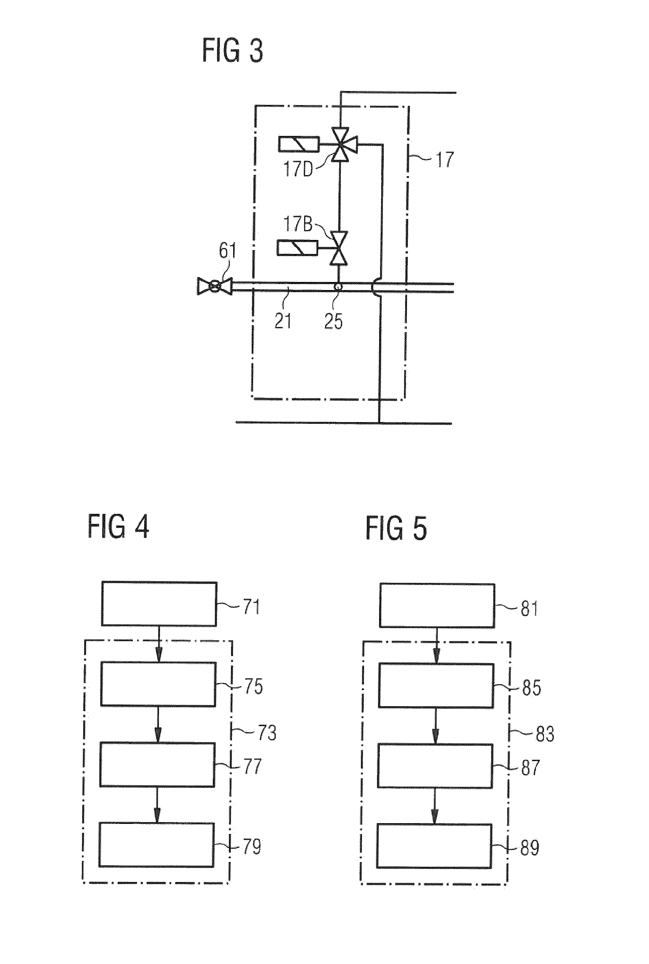

In connection with Fig. 1, a schematic overview of an exemplary gas system of a gas or dual fuel internal combustion engine is described. In connection with Figs. 2 and 3 exemplary configurations of a gas valve unit as well as flushing valve units are described. Flushing procedures are then described in connection with Figs. 4 and 5.

Fig. 1 shows schematically a vessel gas system 1 that is based on a gas valve unit 3. Gas valve unit 3 forms the interface between a storage pressure section 5A and an engine pressure section 5B of the vessel gas system 1.

The herein disclosed concept of gas valve unit 3 allows positioning gas valve unit 3 relatively close to an internal combustion engine 7 and relatively far away from a fuel gas storage unit 9. Accordingly, gas valve unit 3 and internal combustion engine 7 form an engine related part 11 of vessel gas system 1.

As required, for example, for marine applications, a double walled fuel supply storage line 13 connects in the embodiment of Fig. 1 fuel gas storage unit 9 with gas valve unit 3 and, therefore, extends over several ten meters. Accordingly, a large volume may be formed for flushing with inert gas if need, for example, for servicing. Similarly, a double walled fuel supply engine line 15 fluidly connects gas valve unit 3 with internal combustion engine 7 and, for example, may extend up to not more than 10 m.

In the herein disclosed concept for flushing at least sections of the storage pressure section 5A of vessel gas system 1, gas valve unit 3 comprises a flushing valve unit 17.

The inert gas required for flushing may be provided by an inert gas supply system 19A, 19B. Where one provides the inert gas supply system depends - as explained below - on the type of flushing configuration selected for gas valve unit 3, specifically the flushing configuration of flushing valve unit 17. Exemplarily, a gas storage related inert gas supply system 19A is indicated in Fig. 1 as well as an engine related inert gas supply system 19B.

As schematically indicated for completeness in Fig. 1, internal combustion engine 7 comprises inter alia a gaseous fuel system 7A for providing cylinder units 7B in a controllable manner with gaseous fuel.

In Fig. 2, an exemplary embodiment of gas valve unit 3 is shown in detail. In general, gas valve unit 3 is configured as a double walled fuel gas control system for vessel gas system 1. As will be explained below, gas valve unit 3 applies flushing valve unit 17 in particular for flushing storage pressure section 5A of vessel gas system 1.

Gas valve unit 3 comprises a fuel line 21 (shown in Fig. 2 as a double line within gas valve unit 3) for, in the mounted state, fluidly connecting fuel gas storage unit 9 with gaseous fuel system 7A of internal combustion engine 7. Fuel line 21 is provided within a housing 23 of gas valve unit 3. Housing 23 is configured to be airtight such that fuel line 21 forms together with housing 23 a double walled system.

Housing 23 comprises a fuel gas inlet 23A, and a fuel gas outlet 23B. Fuel line 21 fluidly connects fuel gas inlet 23A and fuel gas outlet 23B, respectively for connecting with double walled fuel supply storage line 13 and double walled fuel supply engine line 15, specifically the inner gaseous fuel guiding pipe volumes. Moreover, fuel line 21 comprises a sequence of components, for example, for controlling a gas flow, measuring pressure, measuring flow, measuring temperature, and filtering particles as will be described below.

An outer monitoring volume between the double walls of the double walled fuel supply storage line 13 and double walled fuel supply engine line 15 may be used for monitoring a gas leakage. In some embodiments, that outer monitoring volume may be fluidly connected (at fuel gas inlet 23 and/or fuel gas outlet 23B) to the inner volume of housing 23, thereby forming a single volume for monitoring fuel gas system 11.

Moreover, fuel line 21 comprises a storage flushing access point 25 and a fuel control line section 27.

As shown in Fig. 2, storage flushing access point 25 is fluidly positioned between fuel gas inlet 23A and fuel control line section 27.

As further shown exemplarily in Fig. 2, a filter unit 29 as well as a sequence of flow transducers 31, pressure transducers 33, or pressure indicators 35 may be positioned may be positioned between storage flushing access point 25 and fuel control line section 27 or throughout fuel line 21. Exemplarily, additional pressure indicators 35 and pressure transducers 33 are schematically illustrated within fuel control line section 27 as well as downstream of fuel control line section 27.

As exemplarily shown in Fig. 2, fuel control line section 27 may comprise a flow control valve 37 for regulating the pressure provided to gaseous fuel system 7A, and, thus, for controlling the pressure drop between storage pressure section 5A and engine pressure section 5B.

Fuel control line section 27 may further comprise a double block and bleed valve system 39 including two block valves 39A, 39B, as well as a bleed valve 39C. In general, double block and bleed valve system 39 ensures the required separation of gaseous fuel system 7A from fuel gas storage unit 9 if required.

Regarding bleed valve 39C, gas valve unit 3 may further comprise a safety bleed line 41 fluidly connecting bleed valve 39C with a safety bleed line outlet 41A provided at housing 23. In particular, safety bleed line 41 allows releasing any gaseous fuel to a safe location at ambience in case one of block valves 39A, 39B fails to close.

Furthermore, downstream of fuel control line section 27, a venting valve 43 fluidly connects an output section of fuel line 21 via a venting line 45 with a venting outlet 45A provided at housing 23, thereby forming a venting system. Venting line 45 allows guiding any pressurized gaseous fuel out of gaseous fuel system 7A to the ambience, if required.

Moreover, housing 23 comprises several control ports 47 for connecting gas valve unit 3 with an instrumented air system 49. Instrumented air system 49 is configured for controlling flow control valve 37, for example, via an IP converter 37A, as well as block valves 39A, 39B, and venting valve 43 via electric valves 51. Respective operation of flow control valve 37 as well as block valves 39A, 39B and venting valve 43 are known in the art.

With respect to the flushing concepts disclosed herein, flushing valve unit 17 is connected via a flushing bleed line 53 to a flushing bleed line outlet 53A provided at housing 23. During a specific inert gas flushing procedure and assuming a respective configuration of flushing valve unit 17, flushing bleed line 53 allows relieving gaseous fuel (flushed out by inert gas) from fuel gas storage unit 9 to the ambience.

In the embodiment of flushing valve unit 17 shown in Fig. 2, three electrical valves are used to allow for a flexible implementation of two respective flushing configurations via flushing valve unit 17.

As shown in Fig. 1, flushing valve unit 17 comprises a first normally open valve 17A, a first normally closed valve 17B, and a second normally closed valve 17C.

Flushing bleed line 53 is fluidly connectable via first normally open valve 17A and first normally closed valve 17B to storage flushing access point 25 of fuel line 21.

As further shown in Fig. 2, an inert gas inlet 55A provided at housing 23 is fluidly connectable via second normally closed valve 17C and first normally closed valve 17B to storage flushing access point 25.

Inert gas inlet 55A may be connected to inert gas supply system 19B in case a respective flushing procedure with flushing valve unit 17 is to be implemented in vessel gas system 1.

As further exemplarily shown in Fig. 2, an engine flushing procedure may be provided by using inert gas inlet 55A. For the engine flushing procedure, an engine flushing access point 57 is provided in fuel line 21 and is fluidly connectable via a third normally closed valve 59 to inert gas inlet 55A for flushing the engine side of vessel gas system 1. Engine flushing access point 57 is, for example, fluidly positioned between fuel control line section 27 and fuel gas outlet 23B.

Finally, a ball valve 61 is illustrated in Fig. 2 between fuel gas inlet 23A and storage flushing access point 25.

As will be described below, flushing valve unit 17 allows providing two types of flushing procedures.

Moreover, the configurations disclosed herein may at the same time allow the use of an inert gas systems at "lower" inert gas pressure values. Specifically, not using flushing valve unit 17 may require to provide an inert gas pressure that provides a safety overpressure with respect to the maximum gas pressure upstream of fuel control valve 37. In contrast, when using flushing valve unit 17, one may set the overpressure with respect to the maximal pressure at engine flushing access point 57, which is positioned downstream of flow control valve 37 and, thus, the pressure is lower. For example, upstream of flow control valve 37, a fuel gas pressure may be in the range of 6.5 to 9.5 barg, while downstream of flow control valve 37 a fuel gas pressure may be in the range of 0.5 to 6 barg, the latter being regulated for operating internal combustion engine 7 at varying output power levels.

Accordingly, inert gas supply system 19B may be configured to provide inert gas at a pressures that is at least about 0.5 bar (safety pressure difference) above the those fuel gas pressures. For example, in view of the specific configuration of flushing valve unit 17, an inert gas pressure of about at least 6.5 barg may be sufficient, while without flushing valve unit 17, an inert gas pressure of about 10 barg may be needed.

Fig. 3 illustrates an alternative embodiment of flushing valve unit 17. Therein, first normally open valve 17A and second normally closed valve 17C are configured as a three-way valve 17D. Three-way valve 17D is fluidly connected to flushing bleed line outlet 53A as well as inert gas inlet 55A. Moreover, three-way valve 17D is fluidly connectable via first normally closed valve 17B to storage flushing access point 25. Three-way valve 17D is configured such that the fluid connection to inert gas inlet 55A is normally closed, while the fluid connection to flushing bleed line outlet 53A is normally open.

The above described embodiments of gas valve unit 3 will be understood by the skilled person to be exemplarily. The use of flushing valve unit 17 as disclosed herein may be applicable to alternative configurations of gas valve units as will be understood by the skilled person. For example, the sequence of flow control valve 37 and double block and bleed valve system 39 may be reversed.

### Industrial Applicability

In the following, the operation of a system for flushing a gas storage site of a gaseous fuel system such as vessel gas system 1 shown in Fig. 1 is disclosed. In general (and exemplarily in reference to Fig. 1), such a system may comprise a gas storage unit, a double walled supply pipe, a gas valve unit comprising a fuel line with a storage flushing access point downstream of the fluid connection to the double walled supply pipe, a flushing bleed line outlet fluidly connected to the storage flushing access point, an inert gas inlet fluidly connected to the storage flushing access point, and a valve unit configured to control the fluid connection between the fuel line, and the inert gas inlet and/or the flushing bleed line outlet. Moreover, such a system may comprise an inert gas supply unit fluidly connected to the inert gas inlet of the gas valve unit or to respective valves of a fuel gas storage unit.

Referring to Figs. 4 and 5, if such a system is provided (step 71 in Fig. 4 as well as step 81 in Fig. 5), following flushing procedures 73, 83, respectively, may be performed.

Referring to Fig. 4, one may configure flushing valve unit 17 such that a fluid connection is provided from inert gas inlet 55A to fuel gas storage unit 9. For example, first normally open valve 17A is closed, while first and second normally closed valves 17B, 17C are opened (step 75). Alternatively, in the embodiment of Fig. 3, three-way valve 17D may be switched accordingly and first normally closed valve 17B may be opened.

At that stage, inert gas may be provided to inert gas inlet 55A from inert gas supply system 19B (step 77).

Thereby, one may flush inert gas from inert gas inlet 55A via the respective section of gas valve unit 3 to fuel gas storage unit 9, and, for example, via a valve (bleed line valve 63 shown in Fig. 2) at some location at fuel gas storage unit 9 into the ambience (step 79).

Accordingly, storage pressure section 5A will be flushed with inert gas starting from gas valve unit 3, specifically starting from flushing valve unit 17, up to bleed line valve 63.

The configuration of gas valve unit 3 and, in particular, flushing valve unit 17 further allows the following flushing procedure.

For such a flushing procedure, flushing valve unit 17 may be configured to provide a fluid connection from fuel line 21, specifically storage flushing access point 25, to flushing bleed line outlet 53A. Specifically, second normally closed valve 17C may be maintained closed, while first normally closed valve 17B is opened, and first normally open valve 17A is maintained open.

Bleed line valve 63 may be used to provide inert gas from inert gas supply system 19A into storage pressure section 5A (step 87).

This allows flushing inert gas from bleed line valve 63 through fuel gas storage unit 9 to the respective section of gas valve unit 3, specifically up to storage flushing access point 25, and further through flushing valve unit 17 and flushing bleed line 53 to flushing bleed line outlet 53A (step 89).

While in the above, flushed gases were disclosed to be released into the ambience, collection of those flushed gases may be performed in some alternative embodiments.

While in connection with Fig. 2 and Fig. 3 the normally closed valves and normally open valves are indicated as electrical valves, one or more of those valves may be similarly configured as electro pneumatic valves, for example.

Although the preferred embodiments of this invention have been described herein, improvements and modifications may be incorporated without departing from the scope of the following claims.

## Claims

1. A gas valve unit (3) for providing a double walled fuel gas flow control system for a vessel gas system (1), the gas valve unit (3) comprising:
a fuel line (21) for fluidly connecting a fuel gas storage unit (9) with a gaseous fuel system (7A) of an internal combustion engine (7);
an inert gas inlet (55A) for flushing a section of vessel gas system (1);
a flushing bleed line outlet (53A) for providing an outlet to the environment; and
a flushing valve unit (17) configured to control the fluid connection between the fuel line (21) and the inert gas inlet (55A) and/or the flushing bleed line outlet (53A).

2. The gas valve unit (3) of claim 1, wherein the flushing valve unit (17) comprises a first normally open valve (17A), a first normally closed valve (17B), and a second normally closed valve (17C);
the flushing bleed line outlet (53A) is fluidly connected via the first normally open valve (17A) and the first normally closed valve (17B) to the storage flushing access point (25) of the fuel line (21); and
the inert gas inlet (55A) is fluidly connected via the second normally closed valve (17C) and the first normally closed valve (17B) to the storage flushing access point (25).

3. The gas valve unit (3) of claim 1 or claim 2, further comprising:
a housing (23) comprising a fuel gas inlet (23A) and a fuel gas outlet (23B), wherein the fuel line (21) fluidly connects the fuel gas inlet (23A) and the fuel gas outlet (23B) and comprises the storage flushing access point (25) and a fuel control line section (27), wherein the storage flushing access point (25) is fluidly positioned between the fuel gas inlet (23A) and the fuel control line section (27), and the fuel control line section (27) in particular comprises a flow control valve (37) and a double block and bleed valve system (39), and
wherein the gas valve unit (3) in particular comprises further a safety bleed line outlet (41A) fluidly connected to the double block and bleed valve system (39).

4. The gas valve unit (3) of claim 3, wherein the housing (23) further comprises one or more control ports for connecting the block valves (39A) of the double block and bleed valve system (39) to an instrumented air line.

5. The gas valve unit (3) of any one of the preceding claims, further comprising:
a control unit configured to operate the first normally open valve (17A), the first normally closed valve (17B), and the second normally closed valve (17C).

6. The gas valve unit (3) of any one of the preceding claims, wherein the fuel line (21) further comprises a ball valve (61), a filter unit (29), one or more flow meters, and/or one or more pressure transducers (33) and indicators (35), and
wherein in particular
the ball valve (61) is fluidly positioned between the fuel gas inlet (23A) port and the fuel control line section (27), and/or
the filter unit (29) is fluidly positioned between the fuel gas inlet (23A) port, in particular between the ball valve (61), and the fuel control line section (27).

7. The gas valve unit (3) of any one of claim 3 to claim 6, wherein the fuel gas inlet (23A) is configured for a fluid connection of the control line with a double walled fuel supply storage line (13) of a fuel gas storage unit (9); and/or
the fuel gas outlet (23B) is configured for a fluid connection with a double walled fuel supply engine line (15), in particular connecting the monitoring volume of the double walled fuel supply engine line (15) with the inner volume of housing 23.

8. The gas valve unit (3) of any one of the preceding claims, further comprising:
an engine flushing access point (57) fluidly connected to the inert gas inlet (55A) via a third normally closed valve (59); and/or
a venting system comprising
a venting access point fluidly positioned between the fuel control line section (27), in particular downstream the engine flushing access point (57), and the fuel gas outlet (23B);
a venting outlet (45A); and
a venting line (45) fluidly connecting the venting outlet (45A) via a safety normally open valve (43) with the venting access point.

9. The gas valve unit (3) of any one of the preceding claims, wherein the first normally open valve (17A) and the second normally closed valve (17C) are combined as a three-way valve (17D).

10. The gas valve unit (3) of any one of the preceding claims, wherein the housing (23) and the fuel line (21) are configured to provide together a double walled fuel gas piping configuration, and wherein in particular the housing (23) is a separate essentially gas tight housing or an essentially gas tight room on board the vessel.

11. A system for flushing a gas storage side of a gaseous fuel system (7A), the system comprising:
a gas storage unit;
a doubled walled fuel supply storage line (13);
a gas valve unit (3), in particular a gas valve unit (3) according to any one of the preceding claims, the gas valve unit (3) fluidly connected to the double walled fuel supply storage line (13) and comprising
a fuel line (21) with a storage flushing access point (25) downstream of the fluid connection to the double walled supply pipe;
a flushing bleed line outlet (53A) fluidly connected to the storage flushing access point (25);
an inert gas inlet (55A) fluidly connected to the storage flushing access point (25); and
a valve unit configured to control the fluid connection between the fuel line (21) and the inert gas inlet (55A) and/or the flushing bleed line outlet (53A); and
an inert gas supply unit fluidly connected to the inert gas inlet (55A).

12. The system of claim 11, wherein the valve unit comprises a first normally open valve (17A) and a first normally closed valve (17B) in the fluid connection between the storage flushing access point (25) and the flushing bleed line outlet (53A).

13. The system of claim 12, wherein the valve unit further comprises a second normally closed valve (17C), and the second normally closed valve (17C) and the first normally closed valve (17B) are in the fluid connection between the storage flushing access point (25) and the inert gas inlet (55A).

14. A method for flushing a gas storage side of a gaseous fuel system (7A), the method comprising:
providing (step 71) a system for flushing a gas storage side of a gaseous fuel system (7A) of any one of claim 11 to claim 13 and/or a gas valve unit (3) according to any one of claim 1 to claim 10, the system being fluidly connected to a fuel gas storage unit (9);
configuring (step 73) the flushing valve unit (17) to provide a fluid connection from the inert gas inlet (55A) to the fuel gas storage unit (9);
providing (step 75) inert gas at the inert gas inlet (55A); and
flushing (step 77) the inert gas from the inert gas inlet (55A) via the section of the gas valve unit (3) to the fuel gas storage unit (9) and, in particular to the environment via a bleed line valve (63) of the fuel gas storage unit (9).

15. A method for flushing a gas storage side of a gaseous fuel system (7A), the method comprising:
providing (step 81) a system with a gas valve unit (3) for flushing a gas storage side of a gaseous fuel system (7A) of any one of claim 11 to claim 13 and/or a gas valve unit (3) according to any one of claim 1 to claim 10, the gas valve unit (3) being fluidly connected to a fuel gas storage unit (9);
configuring (step 83) the flushing valve unit (17) to provide a fluid connection from the fuel gas storage unit (9) to the flushing bleed line outlet (53A);
providing (step 85) inert gas to the fuel gas storage unit (9); and
flushing (step 87) the inert gas from the fuel gas storage unit (9) via the section of the gas valve unit (3) to the flushing bleed line outlet (53A).
